# EUROPEAN PATENT APPLICATION

(11) **EP 1 170 178 A2**
(43) Date of publication of application: **09.01.2002**
(21) Application number: 01115645.2
(22) Date of filing: 03.07.2001
(51) Int. Cl.: B60R 9/06

(54) **Rack applicable to the tow hook of a car and the like**

(30) Priority: 07.07.2000 IT MI001541
(71) Applicant: FABBRI S.r.l., I-25040 Bornato - Cazzago san Martino (IT)
(72) Inventor: Fabbri Corsarini, Luciano, 25017 Sedena di Lonato (Prov. of Bresia) (IT)
(74) Representative: Modiano, Guido, Dr.-Ing.

(57) **Abstract**

A rack applicable to the tow hook (6) of a motor vehicle and the like comprising a frame element (2) which is associated with the rack and is provided with means (10,11) for connection to a tow hook (6) of a motor vehicle and the like; the rack further comprises a fixed jaw (10) and a sliding jaw (11) which are opposite and define seats (30) for engaging the tow hook (6), the sliding jaw (11) is associated with lever means (40) for its translational motion between a release position and a locking position on the tow hook (6) and/or vice versa.

## Description

The present invention relates to a rack applicable to the tow hook of a motor vehicle and the like.

It is known that racks and the like applied to the tow hook of a motor vehicle and the like are becoming increasingly widespread.

Known solutions generally have a structure fixed to the tow hook by tightening screws and using tools which in practice rigidly couple the rack to the tow hook protruding to the rear from the vehicle.

These solutions are scarcely practical and poorly accepted by users, because they require long times for their installation and removal as well as a number of relatively complicated operations.

In order to obviate these drawbacks, solutions have already been proposed which allow to rapidly fasten the rack to the tow hook, but these solutions are generally very complicated from a structural point of view and usually do not allow to provide a stable and firm coupling to the tow hook.

The aim of the invention is to eliminate the drawbacks mentioned above by providing a rack applicable to the tow hook of a motor vehicle and the like which can be easily and quickly connected to the tow hook by performing a single movement which allows to provide a stable and safe coupling.

Within this aim, an object of the invention is to provide a rack and the like whereby making all the operations related to the fitting and removal of the rack to be particularly simple.

Another object of the present invention is to provide a rack which, thanks to its particular constructive characteristics, is capable of giving the greatest assurances of reliability and safety in use.

A further object of the present invention is to provide a rack which is in accordance with the technical standards and traffic regulations in force in Europe and worldwide.

Another object of the present invention is to provide a rack which can be easily obtained starting from commonly commercially available elements and materials and is also competitive from a merely economical point of view.

This aim and these and other objects which will become better apparent hereinafter are achieved by a rack applicable to the tow hook of a motor vehicle and the like, according to the invention, comprising a frame element which is associated with a rack and is provided with means for connection to a tow hook of a motor vehicle, characterized in that it comprises a fixed jaw and a sliding jaw which are opposite and define seats for engaging the tow hook, said sliding jaw being associated with lever means for its translational motion between a release position and a locking position on the tow hook and/or vice versa.

Further characteristics and advantages of the invention will become better apparent from the description of a preferred but not exclusive embodiment of a rack applicable to the tow hook of a motor vehicle and the like, illustrated only by way of non-limitative example in the accompanying drawings, wherein:
Figure 1 is a view of a rack, for example of the type for carrying bicycles, applied to a motor vehicle;
Figure 2 is a schematic view of the connection means applied to the frame element;
Figure 3 is a partially sectional view of the step for fitting the frame on the tow hook;

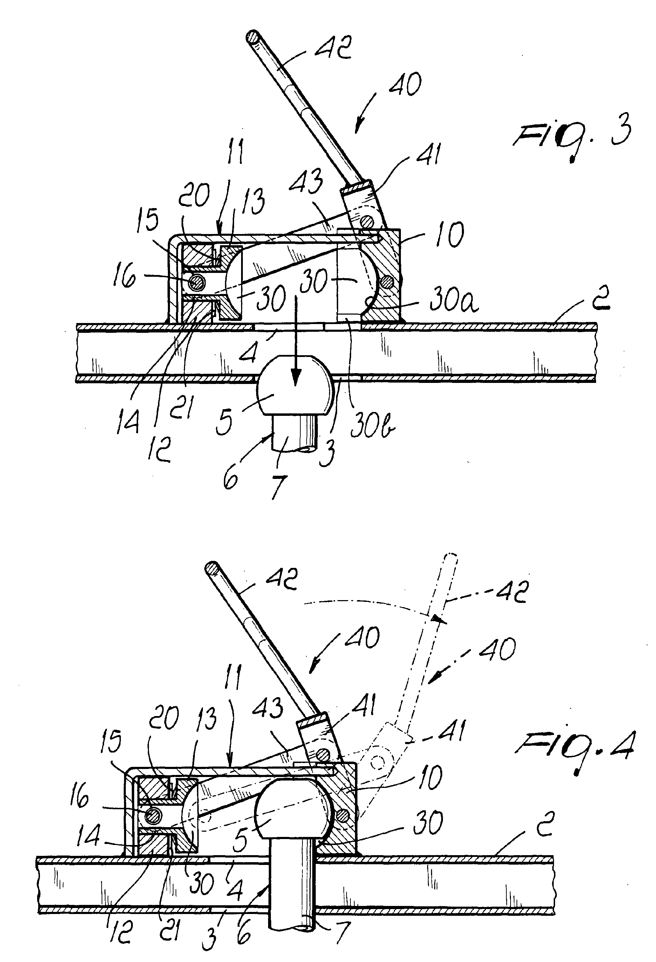

Figure 4 is a sectional view of the frame element applied to the tow hook;
Figure 5 is a sectional view of the step for locking the rack;
Figure 6 is a schematic sectional view, taken along the line VI-VI of Figure 5;

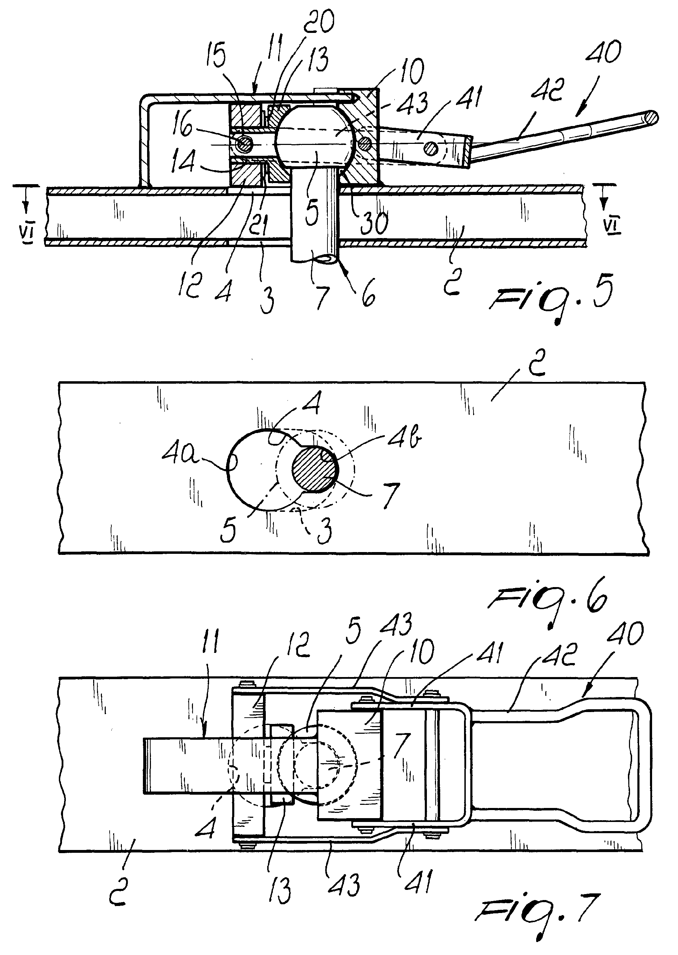

Figure 7 is a schematic top plan view of the rack applied to the tow hook.

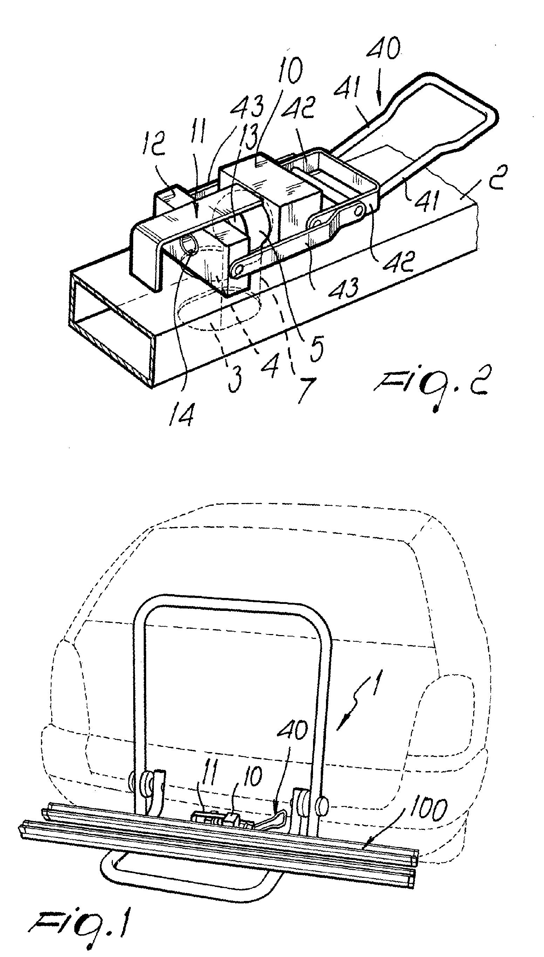

With reference to the figures, the rack applicable to the tow hook of a motor vehicle and the like, according to the invention, generally designated by the reference numeral 1, comprises a frame element 2 which can be structured in any manner and is provided so as to support the rack which, in the specific example shown in Figure 1, is constituted by a bicycle rack 100 but in practice can be constituted by any element deemed appropriate, such as a luggage holder, a ski holder, a container holder, and so forth.

The frame element 2 is provided with a lower through opening 3 and with an upper opening 4 shaped so as to have a wider portion 4a for the passage of the ball 5 of the tow hook, which is generally designated by the reference numeral 6, and a narrower portion 4b which engages the stem 7 of the tow hook 6, which supports the ball 5.

A feature of the invention consists in that connection means are provided on the frame element by a fixed jaw 10 and a movable jaw, generally designated by the reference numeral 11, which has a supporting body 12 to which the jaw element 13 is connected so that it can perform a limited translational motion.

In greater detail, the jaw element 13 is provided with a stem 14 which, through an elongated hole 15, engages a pivot 16 which is coupled to the supporting body 12.

Elastic means are interposed between the supporting body 12 and the jaw element 13 and are advantageously constituted by Belleville springs 20 which act against a supporting washer 21.

The fixed jaw 10 and the jaw element 13 define, on their opposite faces, seats, both designated by the reference numeral 30, for engaging the tow hook 6.

In greater detail, the seats 30 have an upper portion 30a, being shaped like a spherical portion, and a lower portion 30b, being shaped like a cylindrical surface and capable of mating with the stem 7 of the tow hook 6.

In order to perform mutual fastening, a lever means is provided generally designated by the reference numeral 40, which consists of a toggle lever having a lever element 41 which is articulated at one end to the fixed jaw and defines, at its other end, a grip element 42.

A connecting rod 43 is articulated to a central portion of the lever element 41 and is articulated, at its other end, to the supporting body 12 and more specifically to the pivot 16 that is associated with said body.

A friction covering, suitable to provide the maximum possible adhesion when the lever is fastened onto the tow hook, is advantageously provided on the surface of the seats 30.

As shown in Figure 5, when the toggle lever is closed, the central pivoting point of the connecting rod 43 is arranged below the alignment line between the point where the connecting rod is pivoted to the body 12 and the point where the lever 41 is pivoted to the fixed jaw 13, so that a stable equilibrium condition occurs.

In these conditions, the elastic means arranged between the jaw element 13 and the supporting body 12 performs a compensation action which allows to always maintain a stable fastening in all operating positions.

With the above described arrangement it is thus possible to perform very rapid fastening of the rack on the tow hook, obtaining at the same time an extremely stable coupling because rotations about a horizontal axis are prevented by engagement with the stem 7 of the ball 5 of the tow hook 6.

The only possibility of mutual oscillation that is theoretically possible about a vertical axis which coincides with the stem 7, but this kind of oscillation can be locked by way of simple sucker elements which are provided on the rack and engage the rear surface of the vehicle, thus preventing this possibility of oscillation.

From the above description it is evident that the invention achieves the proposed aim and objects, and in particular a rack applicable to the tow hook of a motor vehicle and the like is provided which allows to perform locking and release operations very simply and rapidly and further allows optimum coupling stability by way of the particular shape of the seats provided in the fixed jaw and in the movable jaw and by the covering layer which increases friction and is provided on the seats provided in the jaws.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2000A001541 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A rack applicable to the tow hook of a motor vehicle and the like, comprising a frame element (2) which is associated with the rack (1) and is provided with means (10,11) for connection to a tow hook (6) of a motor vehicle, **characterized in that** it comprises a fixed jaw (10) and a sliding jaw (11,12,13) which are opposite and define seats (30) for engaging said tow hook (6), said sliding jaw (11,12,13) being associated with lever means (40) for its translational motion between a release position and a locking position on said tow hook (6) and/or vice versa.

2. The rack according to claim 1, **characterized in that** said frame element (2) has a through opening (3,4) which defines, at least at the upper part, a contoured opening (4a,4b) with a wider portion (4a) for the passage of the ball (5) of the tow hook (6) and a narrower portion (4b) which can engage the stem (7) of the tow hook (6).

3. The rack according to the preceding claims, **characterized in that** said movable jaw (11) comprises a supporting body (12) to which a jaw element (13) is connected with a limited possibility of mutual movement, elastic means (20) being interposed between said supporting body (12) and said jaw element (13).

4. The rack according to one or more of the preceding claims, **characterized in that** said elastic means (20) are constituted by Belleville springs which are interposed between said supporting body (12) and said jaw element (13).

5. The rack according to one or more of the preceding claims, **characterized in that** said seats (30) have an upper portion (30a) shaped like a spherical portion for engagement with said ball (5) and a lower portion (30b) shaped like a cylindrical surface for engagement with said stem (7).

6. The rack according to one or more of the preceding claims, **characterized in that** said lever means (40) comprises a toggle lever (41).

7. The rack according to one or more of the preceding claims, **characterized in that** said toggle lever comprises a lever element (41) which is articulated, at one of its ends, to said fixed jaw (10) and forms, at its other end, a grip element (42), a connecting rod (43) being articulated to a central portion of said lever element (41), said connecting rod (43) being articulated at the other end thereof, to said supporting body (12).

8. The rack according to one or more of the preceding claims, **characterized in that** it comprises a friction covering provided on the surface of said seats (30).
